# EUROPÄISCHE PATENTSCHRIFT

(11) **EP 0 280 964 B1**
(45) Veröffentlichungstag und Bekanntmachung des Hinweises auf die Patenterteilung: **15.09.1993**
(21) Anmeldenummer: 88102373.3
(22) Anmeldetag: 18.02.1988
(51) Int. Cl.: H01M 2/10, B60R 16/04

(54) **Universalbatterie**
Universal battery
Batterie universelle

(30) Priorität: 02.03.1987 DE 3706653
(43) Veröffentlichungstag der Anmeldung: 07.09.1988
(73) Patentinhaber: GLAHAG Beteiligungs AG, CH-9004 St. Gallen (CH); Electrona S.A., CH-2017 Boudry Kanton Neuenburg (CH)
(72) Erfinder: Furtner, Josef, A-4470 Enns (AT); Schrag, Willy, Ing., CH-2024 St. Aubin (CH)
(74) Vertreter: Hübscher, Heiner, Dipl.-Ing.

(56) Entgegenhaltungen:
- EP-A- 0 132 949
- EP-A- 0 210 317
- DE-A- 2 422 360
- DE-B- 2 741 145
- FR-A- 2 348 581
- FR-A- 2 530 871
- GB-A- 2 120 004
- GB-A- 2 120 004
- GB-A- 2 121 233
- GB-A- 2 121 233
- US-A- 3 093 515
- US-A- 4 693 949
- ENGINEERING, Band 223, Nr. 11, November 1983, Seiten 894-896, London, GB; "Chloride cuts out battery maintenance"

## Beschreibung

Die Erfindung betrifft eine Universalbatterie für Kraftfahrzeuge, insb. PKWs und leichte Lastkraftwagen, gemäß dem Oberbegriff des Patentanspruches 1.

Es ist bekannt, daß Batterien aus einem Auto z.B. von der Fa. Ford in das der Fa. Volkswagen nicht passen, weil die Tragfläche und Halterungen für die Batterien bei den Autos der einzelnen Firmen verschiedene Formen, Größen und Befestigungsvorrichtungen haben. Einige Batteriehersteller versuchen, mit 3 bis 6 Typen den Bedarf an Batterien bei allen Autos abzudecken. Es ist auch bekannt, mittels montierbarer Unterlagen bei Bedarf die Batterie höher zu stellen. Durch solche Maßnahmen passen die Batterien aber nur in eine ungenügende Anzahl von Autotypen, vielleicht in 60 bis 70%, aber nicht in alle auf dem Markt befindlichen Kraftwagen.

Eine Universalbatterie der eingangs genannten Gattung ist bereits bekannt (DE-GM 86 02 061). Die Tragegriffe dienen in der auf dem Batteriedeckel aufgeklappten Stellung zwar für einen gewissen Schutz der Batteriepole nach Art eines alle vier Pole gemeinsam umfassenden Rahmens, im übrigen sind die Batteriepole nach oben jedoch nicht geschützt. Am unteren Rand des Gehäuses, und zwar an dessen Längsseite ist eine Halteleiste befestigt, in deren Vertiefungen Halteorgane eingreifen können, um die Batterie mittels der Halteorgane auf einer Platte in einem Rahmen oder dergleichen zu befestigen. Die Verwendung ein- und derselben Universalbatterie in unterschiedlichen Kraftfahrzeugtypen ist jedoch nicht ohne weiteres möglich.

Dagegen ist es bekannt (DE-GM 76 06 300, GB-PS 2 120 004), auf die sich an der Längsseite des Batteriegehäuses hinziehenden Halteleiste eine zusätzliche Leiste aufzustecken, um die zum Wirksamwerden der Halteorgane erforderliche Bauhöhe von der Unterseite der Batterie bis zu der Angriffsstelle der Halteorgane in Vertiefungen der Halteleiste zu vergrößern. Die universelle Verwendbarkeit solcher mit jeweils einem Paar von Batteriepolen versehenen Batterien ist jedoch ebenfalls beschränkt.

Das gleiche gilt für eine andere bekannte Batterie (EP-OS 132 949), bei der die beiden Batteriepole nach oben durch eine zusätzliche Haube abgedeckt sind, welche die Aufgabe eines Schutzes der Batteriepole nach oben zu erfüllen hat. Batterien dieses Typs sind ebenfalls nicht universell für sehr unterschiedliche Kraftfahrzeugtypen anwendbar.

Der Erfindung liegt die Aufgabe zugrunde, die vorbekannte Batterie auf einfache Weise so auszubilden, daß sie noch universeller verwendbar und einfach in praktisch jedem Auto montierbar ist.

Die Batterie weist ein mit einer Grundleiste am unteren Rand versehenes Gehäuse, Befestigungsleisten und einen Batteriedeckel mit 2- oder 4-Poleanschluß (2 Plus- und 2 Minuspole) und insb. mit einer Haube mit Tragegriffen auf. Die Grundleiste ist nicht nur an einer oder zwei einander entgegengesetzten Seiten des Gehäuses, sondern an allen vier Seiten desselben angeordnet.

In den Zeichnungen sind Batterieteile als Beispiele für die Erfindung dargestellt, dabei zeigen
- Fig. 1: das Gehäuse rechts von der Längsseite und links teilweise im Querschnitt;
- Fig. 2: das Gehäuse rechts von der Stirnseite und links teilweise im Querschnitt;
- Fig. 3: die Batterie mit den rechts und links unten auf dem Gehäuse aufgesteckten Leisten und oben mit Batteriedeckel, Haube und Tragegriffen (liegend) von der Längsseite im Querschnitt; mit einem Teilausschnitt B in Fig. 3a und mit einer Front-Teilansicht in Pfeilrichtung C in Fig. 3b;
- Fig. 5: die Haube von der Stirnseite und
- Fig. 6: die Haube von oben mit dem Teilschnitt A in Fig. 6a;
- Fig. 7: den Tragegriff stehend;
- Fig. 8: den Tragegriff liegend und
- Fig. 9: den Tragegriff in Seitenansicht;
- Fig.10: den Batteriedeckel in Draufsicht und
- Fig.11: den Batteriedeckel von unten;
- Fig.12: die niedrige Befestigungs- oder Steckleiste mit z.B. 8,5 mm Höhe und
- Fig.13: die hohe Befestigungs- bzw. Steckleiste mit z.B. 29 mm Höhe.

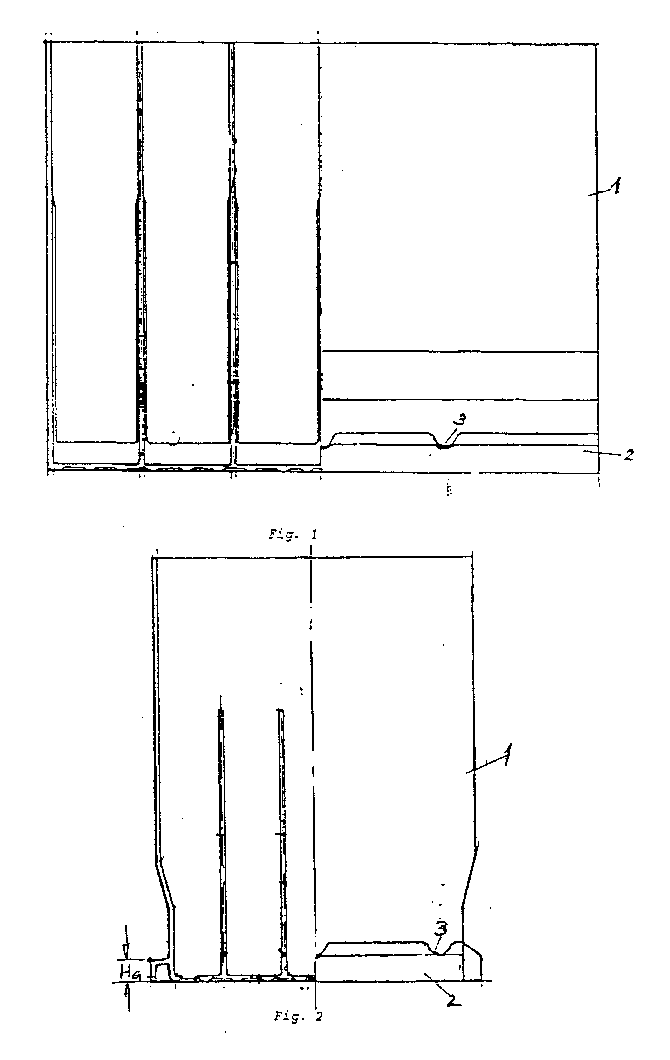

Gemäß Fig. 1 und 2 bildet das Gehäuse 1 mit der außen am unteren Gehäuserand im wesentlichen vollständig umlaufenden Grundleiste 2 eine Einheit. An den Ecken des Gehäuses 1, mit dem die Grundleiste 2 aus einem Stück besteht, kann die Grundleiste 2 auch fehlen. Wichtig ist, daß an allen vier Seiten des Gehäuses 1, den Längsseiten LS und den Stirnseiten SS jeweils Teile der Grundleiste 2 vorhanden sind. Dabei können die auf den Längsseiten LS befindlichen Teile der Grundleiste 2 eine andere Bauhöhe H_{G} aufweisen als die auf den Stirnseiten befindlichen Grundleistenteile. Die Grundleiste 2 mit einer Bauhöhe H_{G} von z.B. 10,5 mm hat drei oder mehrere Vertiefungen 3, durch die die Batterie im Auto mittels Halteorganen befestigt wird. Die Grundleiste 2 steht gemäß Fig. 3a von der Außenwand des Gehäuses 1 seitlich ab und knickt dann nach unten unter Bildung einer nach unten offenen Rinne 2b ab.

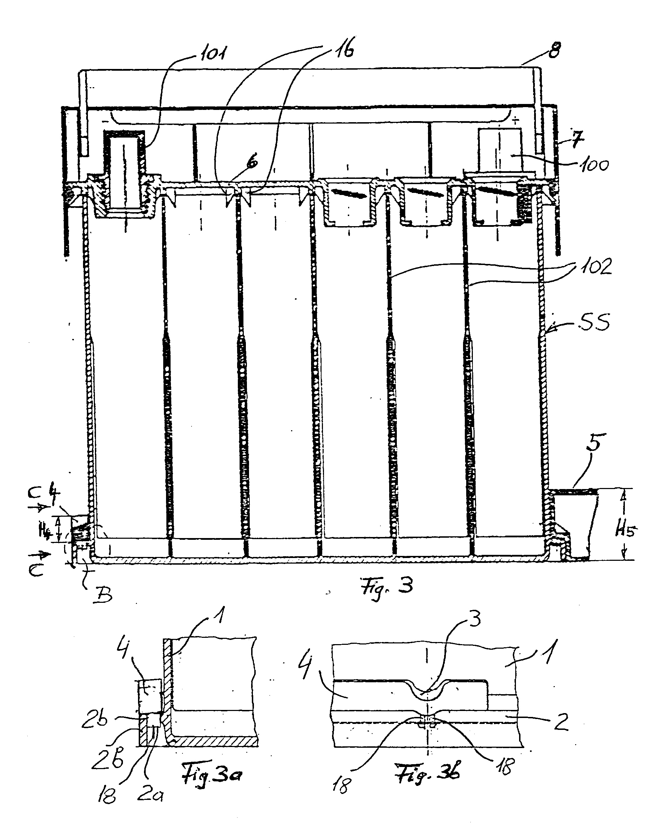

Gemäß Fig. 3 ist die Batterie von der Längsseite LS im Querschnitt dargestellt, wobei z.B. unten rechts auf die Grundleiste 2 die höhere Befestigungsleiste 5 als Steckleiste mit der Höhe H₅ von 29 mm und z.B. unten links die niedrigere Befestigungsleiste 4 wiederum als Steckleiste aufsteckbar sind, welche die Bauhöhe H_{G} der Grundleiste 2 durch Aufstecken bzw. Aufschrauben oder dergleichen Befestigungen von 10,5 mm auf 19,5 mm erhöht. Die auswechselbaren und abnehmbaren Steckleisten 4, 5 sind in Löchern 2a (nur angedeutet) der Grundleiste 2 fixiert.

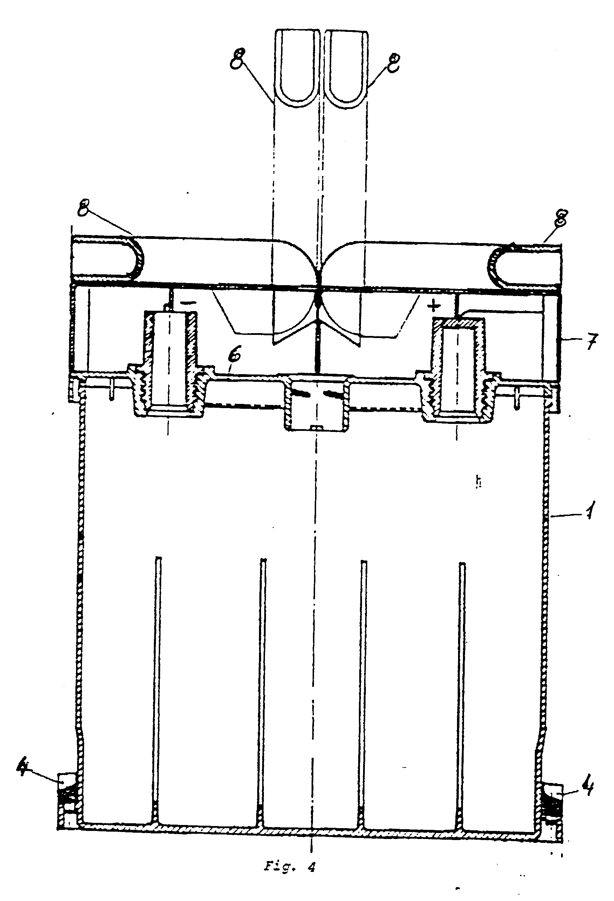

Auf dem Batteriedeckel 6 ist die Haube 7 aufgesteckt. Die Tragegriffe 8 sind liegend dargestellt. Gemäß Fig. 4 ist die Batterie im Querschnitt von der Stirnseite SS mit den Tragegriffen 8 einmal in waagrechter und einmal - alternativ - in senkrechter Position aus der abgesetzten in die tragbare Position bringbar.

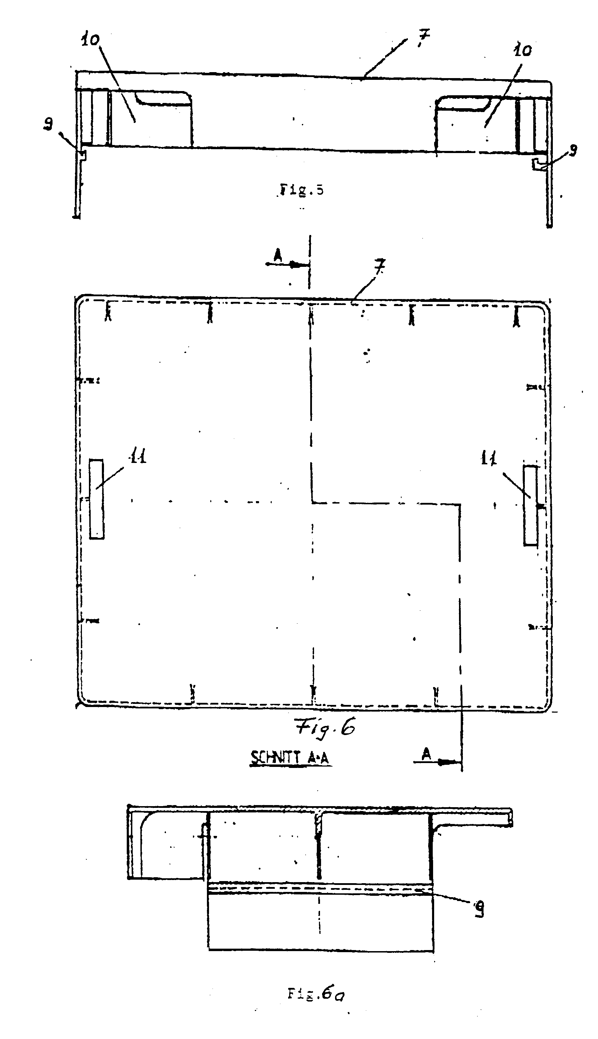

Gemäß Fig. 5 ist die Haube 7 von ihrer Längsseite LS abgebildet. Um die Haube 7 auf dem Batteriedeckel 6 verankern zu können, ist sie mit Schnappern 9 in Form hakenförmiger Elemente ausgestattet. Die Haube 7 hat jeweils zwei Öffnungen 10, die den Anschluß der Kabel an jeweils einem Paar der vier Batteriepole 100, 101 ermöglichen. Jeweils ein Batteriepol 100, 101 ist in einem der vier Eckbereiche der in Draufsicht im wesentlichen rechteckigen Batterie angeordnet.

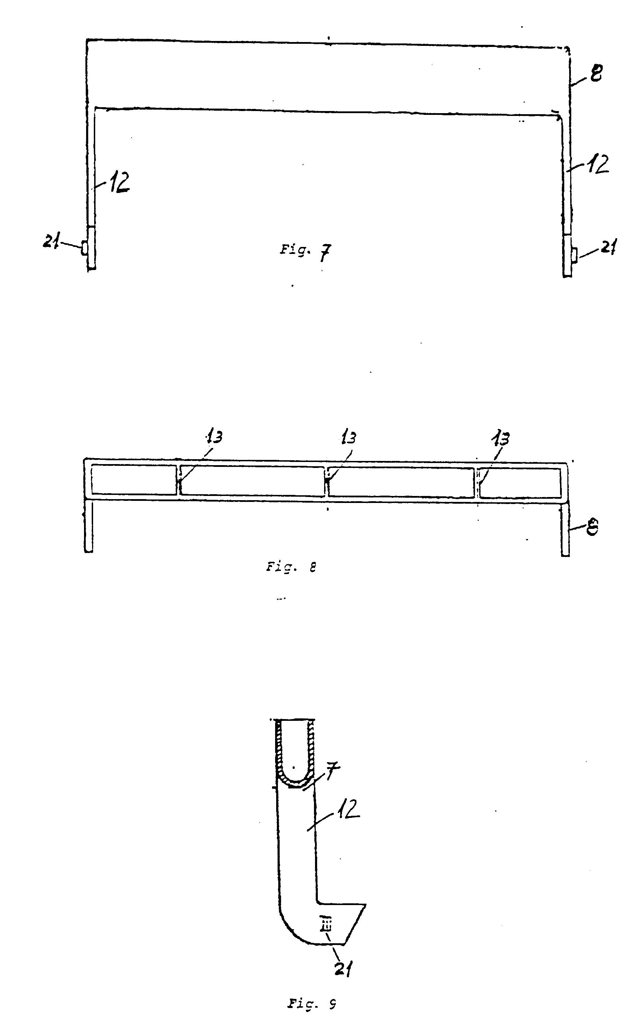

Gemäß Fig. 6 dienen die Schlitze 11 in der Haube 7 für die Verankerung der Tragegriffe 8 (im Schnitt A-A der Fig. 6 ist die Stirnseite SS der Haube 7 zu sehen). In Fig. 7 ist der Tragegriff 8 längsseitig dargestellt. Die zwei noppenartigen nach außen abstehenden Erhebungen 21 gewährleisten die Verankerung der Tragegriffe 8 in den Schlitzen 11 der Haube 7; sie sind aber nach Bedarf ohne Materialzerstörung auch wieder demontierbar.

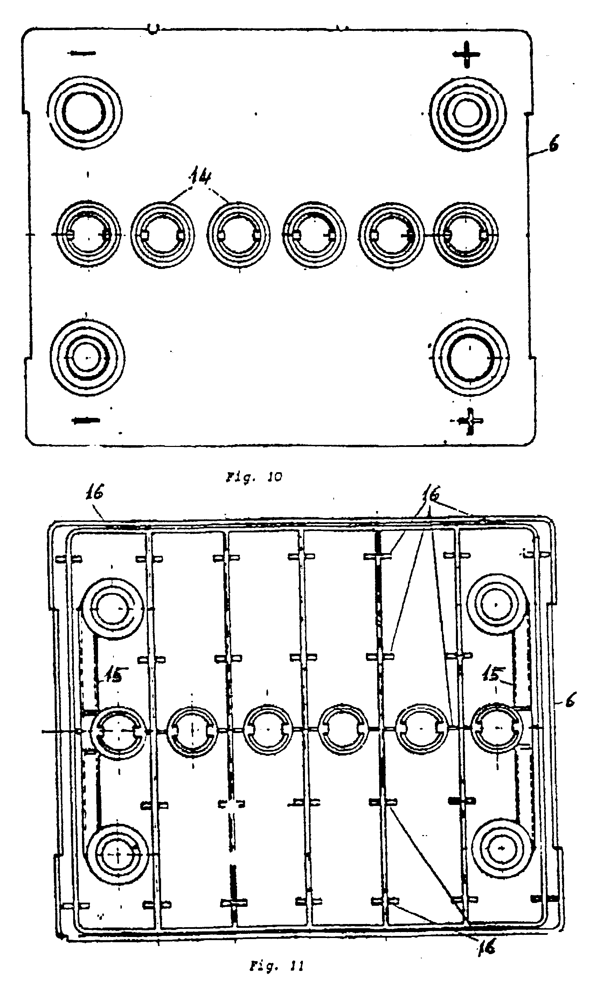

Gemäß Fig. 8 ist der Tragegriff 8 liegend mit den Verstärkungsrippen 13 dargestellt und gemäß Fig. 9 ist der Tragegriff 8 seitlich und teilweise im Schnitt mit den noppenartigen Erhebungen 21 an den Bügeln 12 dargestellt.

In Fig. 10 mit der Darstellung des Batteriedeckels 6 von oben ist der 4-polige Anschluß (zwei Pluspole 100 und zwei Minus-pole 101 mit den Öffnungen 14 zu sehen, die zum Batterieinhalt führen.

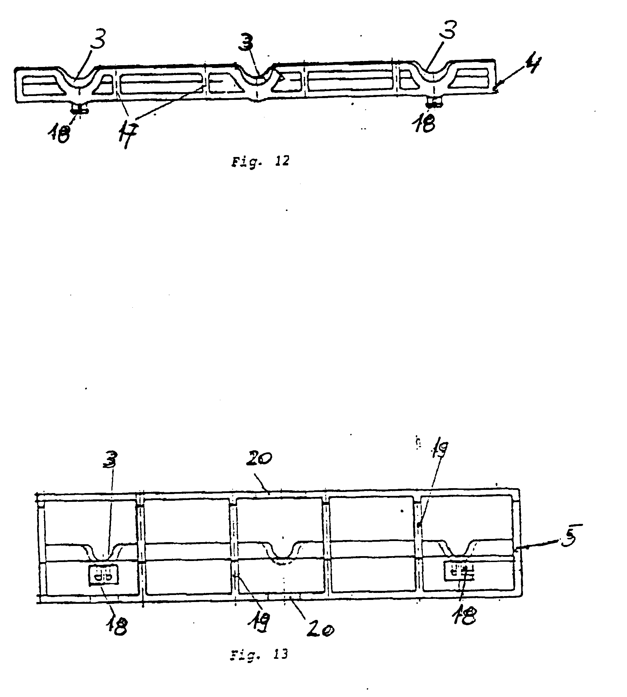

In Fig. 11 ist der Batteriedeckel 6 von unten abgebildet. Die gleichpoligen Batteriepole 100, 101 sind untereinander mit der Doppelbleibüchse 15 verbunden. Es kann jedoch auch ein Deckel mit nur je einem Plus- und je einem Minus-Pol verwendet werden, welcher - durch Zentrieransätze gehalten - mit einer Außenbrücke in einen Doppelpoldeckel abänderbar ist. Der Batteriedeckel 6 wird im üblichen Spiegelschweißverfahren mit dem Gehäuse 1 verbunden. Um den Batteriedeckel 6 auf dem Gehäuse 1 leicht zentrieren zu können, sind an dem Batteriedeckel nach innen bzw. in Richtung zum Gehäuse 1 und zu dessen Trennwänden 102 oder Rippen gerichtete Zentrierrippen 16 angebracht.

Gem. Fig. 12 ist die niedrige Steckleiste 4 mit Verstärkungsrippen 17, federelastisch in die Löcher 2a der Grundleiste 2 einschnappbaren und dann wieder aufspreizbaren Aufsteckschnappern 18 und Vertiefungen 3 abgebildet. Mit dem Austeckschnapper 18 wird die Leiste 4 auf der Grundleiste 2 fixiert. Die Vertiefungen 3 dienen dagegen zur Befestigung der Batterie im Auto, Halteorgane greifen in die Vertiefungen 3 ein.

Gemäß Fig. 13 ist die höhere Steckleiste 5 mit Verstärkungsrippen 19, entsprechenden Aufsteckschnappern 18 und halbkreisförmigen Einschnitten 20 versehen. Mit dem Aufsteckschnapper 18 wird die Leiste 5 wiederum auf der Grundleiste 2 fixiert; während die halbkreisförmigen Einschnitte 20 wie die Vertiefungen 3 die einfache Montage der Batterie im Auto ermöglichen.

Wenn die Universalbatterie zum Beispiel in ein VW-Auto montiert wird, wird auf die Grundleiste 2 längsseits, d.h. auf beiden Längsseiten LS des Gehäuses 1 die niedrige Steckleiste 4 aufgesteckt.

Beim Montieren der Universalbatterie in ein Volvo-Auto wird auf die Grundleiste 2 dagegen auf beiden Stirnseiten SS des Gehäuses 1 die höhere Steckleiste 5 aufgesteckt.

Will man dagegen die Universalbatterie in ein Mazda-Auto einbauen, so bleiben auf der Haube 7 die Tragegriffe 8 aufgesteckt, so daß die Batterie mit dem Spannrahmen im Auto befestigt werden kann.

In einem Ford-Auto kann die Batterie mit der Grundleiste 2 unmittelbar montiert werden, ohne daß zusätzliche insb. als Steckleisten ausgebildete Befestigungsleisten 4,5 erforderlich sind.

Die Batterie-Anschlußkabel sind bei manchen Autotypen sehr kurz. Wenn z.B. ein solches Auto für Pluspol 101 "rechts" ausgelegt ist, kann eine Batterie mit Pluspol 101 "links" nicht eingebaut werden. Dieses Problem wurde bei der Universalbatterie so gelöst, daß die vier Pole 100, 101 durch Drehen der Batterie um 180° mit jedem Kabel angeschlossen werden können, da jeweils zwei Batteriepole derselben Polung an der gleichen Seite der Batterie im Abstand voneinander angeordnet sind.

Die Haube mit dem Tragegriffen ist bei einigen Autotypen zwar nicht erforderlich, diese Elemente können aber dennoch zum Transport der Batterie verwendet werden. Die als "Hohlprofile" ausgebildeten Tragegriffe ergeben einen ausgezeichneten Tragekomfort und sind bei einigen Autotypen als Zwischenelement zum Spannrahmen vorhanden. Die Haube schützt den Batteriedeckel vor Verschmutzung und die Batterie vor eventuellen Kurzschlüssen.

Diese Universalbatterie kann aus Kunststoffen oder Elastomeren hergestellt sein.

## Patentansprüche

1. Universalbatterie für Kraftfahrzeuge mit einem Paar oder mit mindestens einem Doppelpaar von Batteriepolen (Plus- und Minus-Polen), bei der vom unteren Rand des Batteriegehäuses eine Halteleiste absteht, welche mit Vertiefungen versehen ist, die zum Angriff von Halteorganen dienen, und mit schwenkbaren Tragegriffen,
**dadurch gekennzeichnet,**
daß die Halteleiste als eine Grundleiste (2) ausgebildet ist, welche sowohl an die Längsseiten (LS) als auch an die Stirnseiten (SS) des Gehäuses (1) anschließt und zum Aufstecken, Aufklemmen oder dergl. Befestigen von Befestigungsleisten (4, 5) dient, und daß die Tragegriffe (8) an einer Haube (7) angelenkt sind, die am Batteriedeckel (6) verankerbar ist.

2. Universalbatterie nach Anspruch 1,
**dadurch gekennzeichnet,**
daß die Haube (7) auf den Batteriedeckel (6) aufgesteckt ist.

3. Universalbatterie nach Anspruch 1 oder 2,
**dadurch gekennzeichnet,**
daß die Befestigungsleisten (4, 5) Vertiefungen (3) und/ oder Ein- oder Ausschnitte (20), Verstärkungsrippen (17, 19) und zum Befestigen auf der Grundleiste (2) dienende Aufsteckorgane (18) aufweisen.

4. Universalbatterie nach einem der vorhergehenden Ansprüche,
**dadurch gekennzeichnet,**
daß Befestigungsleisten (4, 5) unterschiedlicher Bauhöhe (H₄, H₅) verwendet sind.

5. Universalbatterie nach einem der vorhergehenden Ansprüche,
**dadurch gekennzeichnet,**
daß die Haube (7) mit Schnappern (9) zum Verankern am Batteriedeckel (6), mit Öffnungen (10) für Kabel und mit Schlitzen (11) für die Tragegriffe (8) versehen ist.

6. Universalbatterie nach einem der vorhergehenden Anprüche,
**dadurch gekennzeichnet,**
daß die Tragegriffe (8) mit Verstärkungsrippen (13) und mit noppenartigen Erhebungen (21) versehen sind.

7. Universalbatterie nach einem der vorhergehenden Ansprüche,
**dadurch gekennzeichnet,**
daß die Grundleiste (2) außen am unteren Gehäuserand um das Gehäuse (1) im wesentlichen vollständig umläuft und mit dem Gehäuse (1) einstückig ausgebildet ist.

8. Universalbatterie nach einem der vorhergehenden Ansprüche,
**dadurch gekennzeichnet,**
daß jeweils zwei Batteriepole (100, 101) derselben Polung an der gleichen Batterieseite im Abstand voneinander und jeweils ein Batteriepol (100, 101) in einem der vier Eckbereiche des Batteriedeckels (6) angeordnet sind.

## Claims

1. A universal battery for motor vehicles and having one pair or at least one double pair of battery poles (positive and negative poles), a retaining strip projecting from the bottom edge of the battery housing and being provided with recesses serving for the engagement of retaining means, and having pivotable carrying handles, characterised in that the retaining strip is constructed as a base strip (2) which adjoins both the longitudinal sides (OS) and the end faces (SS) of the battery housing (1) and serves for fixing strips (4, 5) to be pushed, clamped or similarly fixed thereon, and in that the carrying handles (8) are articulated on a cap (7) which is adapted to be anchored to the battery lid (6).

2. A universal battery according to claim 1, characterised in that the cap (7) is pushed on to the battery lid (6).

3. A universal battery according to claim 1 or 2, characterised in that the fixing strips (4, 5) have recesses (3) and/or incisions or cut-outs (20), reinforcing ribs (17, 19) and push-on means (18) for fixing on the base strip (2).

4. A universal battery according to any one of the preceding claims, characterised in that fixing strips (4, 5) of different overall height (H₄, H₅) are used.

5. A universal battery according to any one of the preceding claims, characterised in that the cap (7) is provided with catches (9) for anchoring on the battery lid (6), with openings (10) for cables, and with slots (11) for the carrying handles (8).

6. A universal battery according to any one of the preceding claims, characterised in that the carrying handles (8) are provided with reinforcing ribs (13) and with stud-like projections (21).

7. A universal battery according to any one of the preceding claims, characterised in that the base strip (2) extends substantially completely outside the bottom edge of the housing and around the latter (1) and is made in one piece with the housing (1).

8. A universal battery according to any one of the preceding claims, characterised in that pairs of battery poles (100, 101) of the same polarity are disposed on the same side of the battery in spaced relationship and each battery pole (100, 101) is disposed at one of the four corner zones of the battery lid (6).

## Revendications

1. Batterie universelle pour véhicules automobiles, avec une paire ou au moins une paire double de pôles de batterie (pôles plus et pôle moins), pour laquelle, du bord inférieur du boîtier de batterie, fait saillie une bande de maintien, pourvue de cavités servant à saisir des organes de maintien et équipée de poignées pivotantes,
caractérisée en ce que la bande de batterie est réalisée sous forme d'une bande de base (2), se raccordant tant aux faces longitudinales (LS) qu'également aux faces frontales (SS) du boîtier (1), et servant à enfiler, monter avec serrage ou fixer de façon analogue des bandes de fixation (4, 5), et en ce que les poignées (8) sont articulées sur un côté (7) pouvant être ancré sur le couvercle de batterie (6).

2. Batterie universelle selon la revendication 1,
caractérisée en ce que le capot (7) est enfilé sur le couvercle de batterie (6).

3. Batterie universelle selon la revendication 1 ou 2,
caractérisée en ce que les bandes de fixation (4, 5) présentent des cavités (3) et/ou des entailles ou échancrures (20), des nervures de renforcement (17, 19) et des organes d'enfilage (18) servant à assurer la fixation sur la bande de base (2).

4. Batterie universelle selon l'une des revendications précédentes,
caractérisée en ce que l'on utilise des bandes de fixation (4 5) de hauteurs (H₄, H₅) différentes.

5. Batterie universelle selon l'une des revendications précédentes,
caractérisée en ce que le capot (7) est pourvu d'attaches à déclic (9), pour assurer l'ancrage sur le couvercle de batterie (6), d'ouvertures (10) destinées à des câbles et de fentes (11) pour les poignées (8).

6. Batterie universelle selon l'une des revendications précédentes,
caractérisée en ce que les poignées (8) sont pourvues de nervures de renforcement (13) et de bossages (21) en boutons.

7. Batterie universelle selon l'une des revendications précédentes,
caractérisée en ce que la bande de base (2) fait pratiquement la totalité du pourtour extérieur du boîtier (1), sur la bordure inférieure de boîtier, et est réalisé d'un seul tenant avec le boîtier (1).

8. Batterie universelle selon l'une des revendications précédentes,
caractérisée en ce que chaque fois deux pôles de batterie (100, 101) de même polarité sont disposés du même côté de la batterie, à distance mutuelle et chaque fois un pôle de batterie (100, 101) étant disposé dans l'une des quatre zones d'angle du couvercle de batterie (6).
